# EUROPEAN PATENT APPLICATION

(11) **EP 3 300 334 A1**
(43) Date of publication of application: **28.03.2018**
(21) Application number: 15893971.0
(22) Date of filing: 20.11.2015
(51) Int. Cl.: H04L 29/08

(54) **NETWORK-BASED FILE CLOUD SYNCHRONIZATION METHOD**

(30) Priority: 04.06.2015 CN 201510305748
(71) Applicant: Phicomm (Shanghai) Co., Ltd., Shanghai 201616 (CN)
(72) Inventor: JIN, Guo, Shanghai 200050 (CN)
(74) Representative: Sun, Yiming
(86) International application number: PCT/CN2015/095211
(87) International publication number: WO 2016/192327

(57) **Abstract**

The present disclosure provides a network-based file cloud synchronization method, including: prior to file synchronizations between user terminals and a server, respectively creating file registration information tables for the multiple user terminals and the server, wherein the file registration information tables on the respective user terminals include identifiers of all files created by the respective user terminals and the file registration information table on the server includes identifiers of files already uploaded to the server; on the currently used user terminal, randomly scanning data of a to-be-synchronized file so as to obtain a random feature code to be stored; identifying whether the data of the to-be-synchronized file is consistent with the data of the synchronized file according to the two comparisons between the identifiers and the random feature codes and determining a whole file synchronization operation is performed, no synchronization is performed, or only an incremental synchronization operation is performed.

## Description

### TECHNICAL FIELD

The present disclosure relates to the field of file synchronization used in intelligent machines and, in particular, to a network-based file cloud synchronization method.

### BACKGROUND

With the rapid development of communication networks, individuals may edit or use the same files through different terminals such as smart phones, notebooks, desktops and tablets. How to maintain the same files synchronized across the different terminals is a very realistic problem. The current practice is to synchronize files over networks using the automatic synchronization backup function of cloud storage.

However, file synchronization processes are often accompanied by the issues such as duplicate text passages, similar images, similar audio and video contents, etc. If all files are subjected to synchronization operations without analysis, not only the cloud storage space will be increased, the users will also be confused on the redundant information. For example, during the synchronization of WeChat contact information by a user, if obsolete contact information is synchronized without analysis, it may happen that new information and the obsolete information of a contact both exist on the terminal. The mixed contact information will not only lead to a large volume of information but also confusion to the user - which is eventually the new contact information? Therefore, in order to achieve synchronization across multiple terminals, how to record the differences between files stored in the terminals is particularly important. The current practice is to compare metadata information of the files or record changes of the metadata information to appropriate logs so as to identify differences between the client data and server data. Differentiated files are further synchronized by using metadata to assemble information which is used to identify user files attributes including file names, paths, modification time, authors, permissions, contents, hash function and etc.

Although the existing solutions are to some extent successful, they are still suffering from some defects. For example, sometimes voluminous metadata information on a cloud storage platform requires a certain amount of system overhead for searching and matching. In addition, sometimes files with duplicate contents cannot be identified. Further, synchronized files can only be downloaded by clients in an overwriting manner rather than in an incremental downloading manner, which is a coarse-grained synchronization method.

Therefore, the solutions for avoiding repeated synchronization of duplicate content and allowing incremental synchronization of similar contents while guaranteeing file synchronization across multiple terminals are ready for solve.

### SUMMARY

Embodiments of the present disclosure provide a network-based file cloud synchronization method so as to effectively avoid duplicate synchronization operations and save sever I/O traffic, while optimizing the processing of to-be-synchronized downloading files and preventing the duplicate data synchronization issue.

In order to achieve the above object and other related objects, the present disclosure provides a network-based file cloud synchronization method mainly used to realize network-based file synchronization operations between multiple user terminals and a server in a same cloud storage space, wherein the network-based file cloud synchronization method includes the steps of: 1) respectively creating file registration information tables for the multiple user terminals and the server in a same cloud storage space, wherein the file registration information table for each user terminal includes all file identifiers created on each user terminal and the file registration information table for the server includes the file identifier uploaded to the server; 2) determining whether a to-be-synchronized file is stored on the server, if so, performing step 3), if not, indicating that the file to be synchronized is stored on one of the user terminals, and performing step 4); 3) in the currently used user terminal, extracting the identifier of the to-be-synchronized file from the file registration information table on the server, randomly scanning data of the to-be-synchronized file so as to obtain a random feature code to be stored in the cloud storage space in a synchronized manner, and performing step 5); 4) in the currently used user terminal, extracting the identifier of the to-be-synchronized file from the file registration information table on the currently used user terminal, randomly scanning data of the to-be-synchronized file, so as to obtain a random feature code to be stored in the cloud storage space in a synchronized manner, and performing step 6); 5) whether an identifier consistent with the extracted identifier corresponding to the to-be-synchronized file exists in file registration information table on the currently used terminal,, if so, performing step 7), and if not, performing a whole file synchronization operation on the to-be-synchronized file between the currently used user terminal and the server; 6) searching whether an identifier consistent with the extracted identifier corresponding to the to-be-synchronized file exists in file registration information table on the server, if so, performing step 7), and if not, performing a whole file synchronization operation on the to-be-synchronized file between the currently used user terminal and the server; and 7) analyzing, by a suffix tree algorithm, whether the random feature code of the to-be-synchronized file to be synchronized is consistent with the random feature code of the stored file with the same identifier, if so, terminating the performance of the synchronization operation on the to-be-synchronized file, and if not, performing an incremental synchronization operation between the currently used user terminal and the server according to the analysis result. Wherein, the identifier is a unique file identifier assigned by the user terminal for each created file.

The file registration information table further includes at least one of file name, modification time, permission and hash function.

Preferably, step 2) further includes: in the currently used user terminal, randomly scanning the data of the to-be-synchronized file so as to form a finite element data set, randomly extracting a feature code from the finite element data set so as to generate the random feature code to be stored in the cloud storage space in a synchronized manner. Wherein, the finite element data set obtains a header, a byte code or a data stream and anyone of the to-be-synchronized file according to the hash function of the to-be-synchronized file. Alternatively, the finite element data set extracted values from the to-be-synchronized file by a difference method. As mentioned above, the network-based file cloud synchronization method of the present disclosure essentially includes: prior to file synchronizations between user terminals and a server, respectively creating file registration information tables for the multiple user terminals and the server, wherein the file registration information table for each user terminal includes all file identifiers created on each user terminals and the file registration information table for the server includes the file identifiers uploaded to the server; then in a currently used user terminal, randomly scanning data of a to-be-synchronized file so as to obtain a random feature code to be stored; and determining whether it is necessary to update data of the to-be-synchronized file according to two comparisons, and determining whether an identifier identical to the identifier of the to-be-synchronized file according to the created file registration information tables exsits. If so, it is further determined whether the random feature codes of the two files with the same identifier are identical to each other. If so, they are identical files and no synchronization operations are performed. If not, an incremental operation is performed. This significantly avoids repeated synchronization operation and saves the server's I/O traffic.

### BRIEF DESCRIPTION OF THE DRAWINGS

Fig. 1 is a flowchart showing operations in a network-based file cloud synchronization method of the present disclosure.
Fig. 2 is a schematic showing a specific application environment example for Fig. 1.

### Description of Reference Numerals of Elements

- 1: Network
- 2: Server
- 21: Cloud Storage Space
- A: Notebook
- B: Smart Phone
- C: Tablet
- S100∼S162: Steps

### DETAILED DESCRIPTION

The present disclosure will be described below by means of specific embodiments. Other advantages and effects of the disclosure will be readily understood by those skilled in the art from the disclosure herein. The present disclosure may also be implemented or utilized as other different specific embodiments, and various modifications or changes may be made to the details disclosed herein from different views and for different applications without departing from the spirit of the disclosure. It is noted that in case of no conflict, the following embodiments and the features in the embodiments may be combined with each other.

It is noted that the drawings presented in the following embodiments are intended merely to illustrate the basic concept of the present disclosure in a schematic manner and hence only show the components related hereto which are not drawn to their quantities, shapes and sizes in actual implementations where their configurations, quantities and scales may vary arbitrarily and their arrangements may also be more complex.

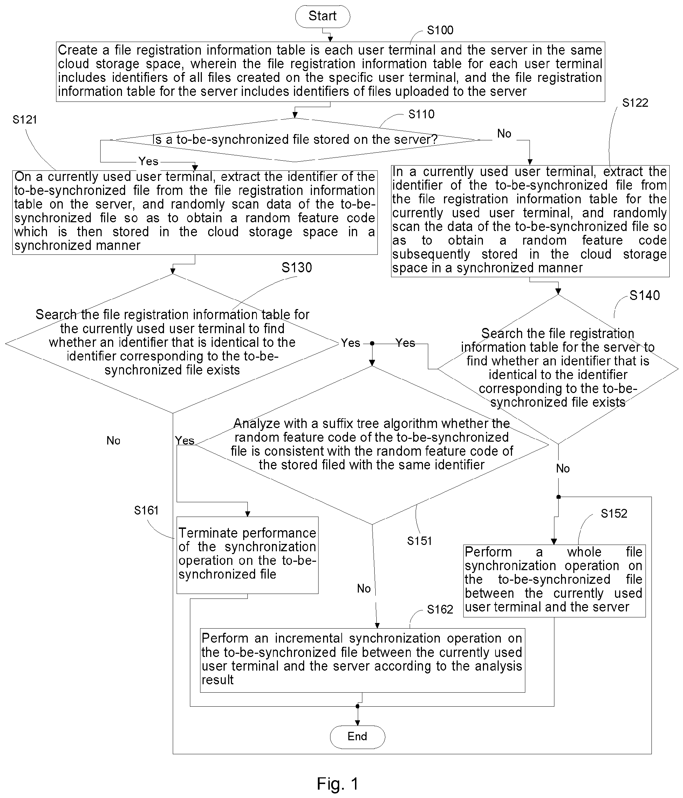

Referring to Fig. 1, the present disclosure provides a network-based file cloud synchronization method mainly used to realize network-based file synchronization operations between multiple user terminals and a server within the same cloud storage space. Wherein, the files may be multimedia data, audios, videos, images, text, etc.

As shown in Fig. 1, at first, step S100 is performed so that a file registration information table is created for each user terminal and the server in the same cloud storage space, wherein the file registration information table for each user terminal includes file names, modification time, permission, hash function and identifiers of all files created on the specific user terminal, and the file registration information table for the server includes file names, modification time, permission, hash function and identifiers of files uploaded to the server. Wherein, the identifier is a unique file identifier created by the user terminal for each created files. Next, step S110 is performed.

In step S110, it is determined whether a to-be-synchronized file is stored on the server. If so, step S121 is performed. If not, it is indicated that the to-be-synchronized file is stored on one of the user terminals, and step S122 is performed.

In step S121, on a currently used user terminal, the identifier of the to-be-synchronized file is extracted from the file registration information table on the server, and data of the to-be-synchronized file is randomly scanned so as to obtain a random feature code which is then stored in the cloud storage space in a synchronized manner. Specifically, in the currently used user terminal, the data of the to-be-synchronized file is randomly scanned so as to form a finite element data set, and a feature code is randomly extracted from the finite element data set so as to generate a random feature code. The random feature code is synchronously stored in the cloud storage space. Wherein, the finite element data set is a header, a byte code or a data stream and anyone of the to-be-synchronized file according to the hash function of the to-be-synchronized file, or the finite element data set extracted values from the to-be-synchronized file by a difference method. It is noted here that the finite element data set is not limited to be obtained by one of the manners enumerated above. As such obtaining approaches are well-known techniques in the art, a description is not necessary herein. Thus, the random feature code generated by randomly extracting a feature code from the finite element data set is arbitrary and can hence represent the inherent nature of the data file. Next, step S130 is performed. In step S122, in a currently used user terminal, the identifier of the to-be-synchronized file is extracted from the file registration information table for the currently used user terminal, and the data of the to-be-synchronized file is randomly scanned so as to obtain a random feature code subsequently stored in the cloud storage space in a synchronized manner. Next, step S140 is performed.

In step S130, the file registration information table for the currently used user terminal is searched to find whether an identifier that is identical to the identifier corresponding to the to-be-synchronized file exists. If so, step S151 is performed, and If not, step S152 is performed.

In step S140, the file registration information table for the server is searched to find whether an identifier that is identical to the identifier corresponding to the to-be-synchronized file exists. If so, step S151 is performed, and If not, step S152 is performed.

In step S151, it is analyzed with a suffix tree algorithm whether the random feature code of the to-be-synchronized file is consistent with the random feature code of the stored filed with the same identifier. If so, step S161 is performed, and If not, step S162 is performed.

In step S152, a whole file synchronization operation is performed on the to-be-synchronized file between the currently used user terminal and the server, and the file synchronization process is ended.

In step S161, performance of the synchronization operation on the to-be-synchronized file is terminated, and the file synchronization process is ended.

In step S162, an incremental synchronization operation is performed on the to-be-synchronized file between the currently used user terminal and the server according to the analysis result, and the file synchronization process is ended.

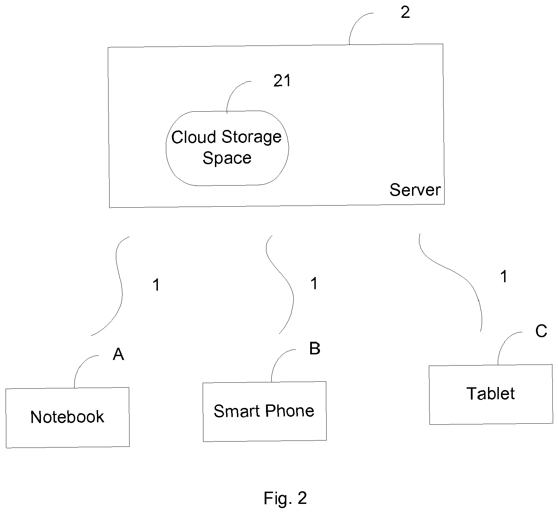

In order to understand the applications of the network-based file cloud synchronization method of the present disclosure in further details, as shown in Fig. 2, illustrated with a single user using the same cloud storage space 21 with multiple user terminals (a notebook A, a smart phone B and a tablet C) based on a network 1 as an example, a detailed description will be provided about a process of operations for using the file cloud synchronization method of the present disclosure to achieve synchronized uploading of to-be-synchronized files from the user terminals to the server and synchronized downloading of to-be-synchronized files from the server to the user terminals.

As shown in Fig. 2, the cloud storage space 21 is a storage space assigned to the user by the server 2. Upon the user signing in the cloud storage space 21 based on the network 1, the server 2 creates a file registration information table for the user in the server 2 (hereinafter referred to as the form t1) and file registration information tables for the respective user terminals. In order to facilitate the description, hereinafter, the file registration information table created for the notebook A is briefed as form t2, the file registration information table created for the smart phone B is briefed as form t3, and the file registration information table created for the tablet C is briefed as form t4. Wherein, the form t2 includes file names, modification time, permission, hash function, identifiers and the like of all files created by the notebook A, the form t3 includes file names, modification time, permission, hash function, identifiers and the like of all files created by the smart phone B, and the form t4 includes file names, modification time, permission, hash function, identifiers and the like of all files created by the tablet C.

With the application environment shown in Fig. 2, when the user logs into the cloud storage space 21 from the notebook A with the intention to upload a to-be-synchronized file d1 stored in the notebook A to the server 2 in a synchronized manner, at the backend, the notebook A starts to initiate a search in the form t2 for the identifier of the to-be-synchronized file d1 on the notebook A, randomly scans the data of the to-be-synchronized file d1 so as to form a finite element data set, randomly extracts a feature code from the finite element data set so as to generate a random feature code to be stored in the cloud storage space 21 of the server 2. After that, it searches the form t1 on the server 2 to find whether a random identifier that is identical to the random identifier of the to-be-synchronized file d1 exists. If not, the whole to-be-synchronized file d1 is uploaded to the cloud storage space of the server 2 in a synchronized manner. If so, a suffix tree algorithm is used to analyze whether the random feature code of the to-be-synchronized file d1 is consistent with the random feature code of the stored file with the same identifier. If so, the synchronization operation for the to-be-synchronized file d1 is terminated. If not, an incremental synchronization operation is performed on the to-be-synchronized file d1 between the notebook A and the server 2 based on the analysis result.

With the application environment shown in Fig. 2, when the user logs into the cloud storage space 21 from the smart phone B to synchronize a to-be-synchronized file d2 stored in the cloud storage space 21 with the smart phone B, at the backend, smart phone B starts to initiate a search in the form t1 on the server 2 for the identifier of the to-be-synchronized file d2, randomly scans the data of the to-be-synchronized file d2 so as to form a finite element data set, randomly extracts a feature code from the finite element data set so as to generate a random feature code to be stored in the cloud storage space 21 on the server 2 in a synchronized manner. After that, a search is carried out in the form t3 for the smart phone B to find whether a random identifier identical to the random identifier of the to-be-synchronized file d2 exists. If not, the whole to-be-synchronized file d2 is downloaded to the smart phone B in a synchronized manner. If so, the suffix tree algorithm is used to analyze whether the random feature code of the to-be-synchronized file d2 is consistent with the random feature code of the stored file with the same identifier. If so, the synchronization operation for the to-be-synchronized file d2 is terminated. If not, an incremental synchronization operation is performed on the to-be-synchronized file d2 between the smart phone B and the server 2 based on the analysis result.

In summary, in the network-based file synchronization method of the present disclosure, the parameters, i.e., the identifiers and random feature codes, are used in two comparisons for determining whether the data of a to-be-synchronized file are consistent with the data of a synchronized file. Then it is determined to carry out a whole file synchronization operation, or no synchronization operations, or only an incremental synchronization operation. As such, duplicate synchronization operations are effectively avoided, while allowing significantly reduces the I/O traffic of the server, optimized processing on the to-be-synchronized data and prevention of the repeated data synchronization issue. In addition, for similar files, it is found that the files with same identifier exist updates by a suffix tree algorithm analysis on the random feature code, which can be an operation basis for the incremental synchronization. Thus, the solution provided by the present disclosure is a fine-grained solution. Therefore, the present disclosure has effectively overcome the various drawbacks of the prior art and has a high value in industrial use.

The embodiments presented above merely explain the principles and effects of the present disclosure exemplarily and are not intended to limit the disclosure. Any person familiar with the art can make modifications or changes to the above embodiments without departing from the spirit and scope of the disclosure. Accordingly, all equivalent modifications or changes made by those of ordinary skill in the art without departing from the spirit and technical concept disclosed herein are intended to be embraced by the claims of the present disclosure.

## Claims

1. A network-based file cloud synchronization method for network-based file synchronization operations between multiple user terminals and servers in a same cloud storage space, wherein the network-based file cloud synchronization method comprises the steps:
1) creating file registration information tables for the multiple user terminals and the server, respectively, in a same cloud storage space, wherein the file registration information table for each user terminal comprises all file identifiers created on each user terminal, the file registration information table for the server comprises the file identifier uploaded to the server;
2) determining whether a to-be-synchronized file is stored on the server; if so, performing step 3); or if not, indicating that the file to be synchronized is stored on one of the user terminals, and performing step 4);
3) in the currently used user terminal, extracting the identifier of the to-be-synchronized file from the file registration information table on the server, randomly scanning data of the to-be-synchronized file to obtain a random feature code to be stored in the cloud storage space in a synchronized manner, and performing step 5);
4) in the currently used user terminal, extracting the identifier of the to-be-synchronized file from the file registration information table on the currently used user terminal, randomly scanning data of the to-be-synchronized file to obtain a random feature code to be stored in the cloud storage space in a synchronized manner, and performing step 6);
5) deciding whether an identifier consistent with the extracted identifier corresponding to the to-be-synchronized file exists in file registration information table on the currently used terminal; if yes, performing step 7); or if not, performing a complete file synchronization operation on the to-be-synchronized file between the currently used user terminal and the server;
6) deciding whether an identifier consistent with the extracted identifier corresponding to the to-be-synchronized file exists in file registration information table on the server; if yes, performing step 7); or if not, performing a complete file synchronization operation on the to-be-synchronized file between the currently used user terminal and the server; and
7) analyzing, by a suffix tree algorithm, whether the random feature code of the to-be-synchronized file is consistent with the random feature code of the stored file with the same identifier; if yes, terminating the performance of the synchronization operation on the to-be-synchronized file; or if not, performing an incremental synchronization operation between the currently used user terminal being and the server according to the analysis result.

2. The network-based file cloud synchronization method according to claim 1, wherein the identifier is a unique file identifier assigned by the user terminal for each created file.

3. The network-based file cloud synchronization method according to claim 1, wherein the file registration information table further comprises at least one of a file name, modification time, a permission, or a hash function.

4. The network-based file cloud synchronization method according to claim 1, wherein step 2) further comprises: in the currently used user terminal, randomly scanning the data of the to-be-synchronized file to form a finite element data set, randomly extracting a feature code from the finite element data set to generate a random feature code to be stored in the cloud storage space in a synchronized manner.

5. The network-based file cloud synchronization method according to claim 4, wherein the finite element data set is at least one of a header, a byte code, a data stream, or other content in the to-be-synchronized file obtained according to the hash function of the to-be-synchronized file.

6. The network-based file cloud synchronization method according to claim 4, wherein the finite element data set are extracted values from the to-be-synchronized file by a difference method.

7. The network-based file cloud synchronization method according to claim 1, wherein the file is at least one of a multimedia data file, an audio, a video, an image or a text file.
